# EUROPEAN PATENT APPLICATION

(11) **EP 0 959 473 A2**
(43) Date of publication of application: **24.11.1999**
(21) Application number: 99303828.0
(22) Date of filing: 17.05.1999
(51) Int. Cl.: G11B 27/00, G11B 15/18, G11B 20/10

(54) **Method and apparatus for recording block signal**

(30) Priority: 22.05.1998 JP 14143998
(71) Applicant: VICTOR COMPANY OF JAPAN, LTD., Yokohama-Shi, Kanagawa-Ken (JP)
(72) Inventor: Yoshida, Yumi, Ebina-shi, Kanagawa-ken (JP)
(74) Representative: Crawford, Andrew Birkby

(57) **Abstract**

Digital signals for normal reproduction (play) are recorded over sequential tracks on a magnetic tape at a specific speed by magnetic heads. The digital signals for normal reproduction will be reproduced also at the specific speed. Digital signals for special reproduction (trick play) are recorded intermittently at the specific speed instead of the digital signals for normal reproduction by the magnetic heads on specific locations of the tracks along paths which will be traced on the magnetic tape by the magnetic heads during the special reproduction. The digital signals for special reproduction will be reproduced at speeds different from the specific speed. Subcode blocks are recorded at or near starting edges of the tracks which will be traced by the magnetic heads from the starting edges during the special reproduction. The subcode blocks include at least special reproduction data related to the digital signals for special reproduction.

## Description

### BACKGRUND OF THE INVENTION

This invention relates to a method and an apparatus for recording digital video signals into a storage medium per data block, and also recording special reproduction (trick play) data into the storage medium.

Well known digital video tape recorders (VTRs) record video signals which have been converted into digital data by compression coding according to MPEG (Moving Picture Experts Group) standards on a magnetic tape as tracks, and reproduce the recorded digital data by means of rotary magnetic heads.

There is a digital VTR that records digital video signals on a magnetic tape as inclined tracks and also special reproduction data on specific locations on the magnetic tape that will be traced by rotary magnetic heads in special reproduction. The special reproduction data for different speed reproduction are recorded at different locations on the magnetic tape. Because rotary magnetic heads trace different paths on the magnetic tape at different speeds in special reproduction.

The special reproduction data include special reproduction video data and other data related to special reproduction such as special reproduction mode data. The digital VTR detects the special reproduction mode data included in the other data to carry out special reproduction such as quick reproduction. The VTR carries out quick reproduction at a speed according to the special reproduction mode.

Special reproduction, such as high speed reproduction, is carried out in such a way that it is conducted at a speed according to a special reproduction mode data included in special reproduction data, and when a reproduction speed is switched to another speed, the special reproduction continues at the other speed.

When the reproduction mode is switched from normal speed reproduction to special reproduction, this type of digital VTR detects locations of special reproduction data according to special reproduction mode data to carry out special reproduction to a magnetic tape on which normal and special reproduction data have been recorded. The special reproduction mode data is included in the special reproduction data that is reproduced beforehand during the normal speed reproduction.

However, when the reproduction mode is switched from special reproduction at a first speed to special reproduction at a second speed, since no special reproduction data for the second speed reproduction has not been reproduced until the second speed reproduction starts, there is a possibility in that no data exists on the locations where the special reproduction data for the second speed reproduction is expected to be recorded. This results in no smooth reproduction change from special reproduction at a speed to special reproduction at another speed.

### SUMMARY OF THE INVENTION

The present invention provides a method and an apparatus for recording normal and special reproduction (trick play) data for smooth and accurate reproduction change from special reproduction at a speed to special reproduction at another speed whenever a reproduction mode is switched from the former to the latter reproduction.

The present invention provides a method of recording digital signals as sequential tracks on a magnetic tape. Digital signals for normal reproduction are recorded over the tracks at a specific speed by magnetic heads. The digital signals for normal reproduction will be reproduced also at the specific speed. Digital signals for special reproduction are recorded intermittently at the specific speed instead of the digital signals for normal reproduction by the magnetic heads on specific locations of the tracks along paths to be traced on the magnetic tape by the magnetic heads during the special reproduction. The digital signals for special reproduction will be reproduced at speeds different from the specific speed. Subcode blocks including at least special reproduction data related to the digital signals for special reproduction are recorded at or near starting edges of the tracks. The tracks will be traced by the magnetic heads from the starting edges during the special reproduction.

Furthermore, the present invention provides an apparatus for recording digital signals on a magnetic tape. The apparatus includes a first generator that generates digital signals for special reproduction based on digital signals for normal reproduction. The digital signals for normal reproduction will be recorded and reproduced at the same specific speed. On the other hand, the digital signals for special reproduction will be recorded at the specific speed but reproduced at speeds different from the specific speed. The apparatus also includes a selector that selects, as main data, either the digital signals for normal reproduction or the digital signals for special reproduction at timing in accordance with the speeds at which the digital signals for special reproduction are to be reproduced; and a second generator that generates subcode data including at least special reproduction data related to the digital signals for special reproduction. The apparatus furhter includes a multiplexer that multiplexes at least the main data and the subcode data to output multiplexed data; and a recorder that records the multiplexed data as sequential tracks on the magnetic tape by magnetic heads in such a way that the digital signals for normal reproduction are recorded over the tracks at the specific speed, the digital signals for special reproduction are intermittently recorded at the specific speed instead of the digital signals for normal reproduction on specific locations of the tracks along paths to be traced on the magnetic tape by the magnetic heads during the special reproduction, and the subcode blocks are recorded at or near starting edges of the tracks, the tracks being to be traced by the magnetic heads from the starting edges during the special reproduction.

Moreover, the present invention provides a storage medium for storing digital signals. The storage medium includes first sequential data area, second data areas that are provided on specific locations of the first data areas along paths on the storage medium to be traced by a detector, and third data areas that are provided at or near starting edges of the first data areas. The first sequential data areas stores digital signals for normal reproduction. The digital signals for normal reproduction have been recorded over the first data areas at a specific speed and will be reproduced also at the specific speed. The second data areas stores digital signals for special reproduction. The digital signals for special reproduction have been recorded intermittently at the specific speed instead of the digital signals for normal reproduction. The digital signals for special reproduction will be reproduced at speeds different from the specific speed. And, the third data areas stores subcode blocks including at least special reproduction data related to the digital signals for special reproduction. The first data areas will be traced by the detector from the starting edges during the special reproduction.

### BRIEF DESCRIPTION OF DRAWINGS

FIG. 1 is a block diagram of a preferred embodiment of a recording apparatus according to the present invention;
FIG. 2 illustrates a track pattern formed on a magnetic tape according to the present invention;
FIG. 3 illustrates an example of data format of a sync block;
FIG. 4 illustrates an example of data format of each track shown in FIG. 2;
FIG. 5 illustrates an example of data format of subcode recorded in the subcode area shown in FIG. 2; and
FIG. 6 illustrates an example of each pack data shown in FIG 5.

### DETAILED DESCRIPTION OF PREFERRED EMBODIMENTS

Preferred embodiment according to the present invention will be described with reference to the attached drawings.

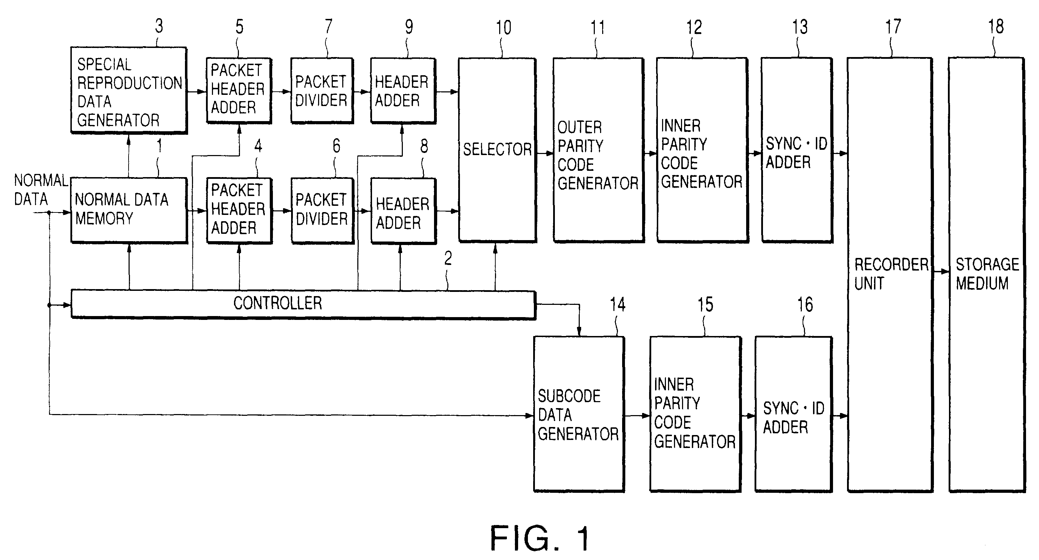

Shown in FIG. 1 is a block diagram of a preferred embodiment of a recording apparatus according to the present invention. The signal subjected to recording by the apparatus of FIG. 1 is a packet data that is a digital signal for normal reproduction (play) in which the signal will be reproduced at the same speed as that for recording.

The digital signal for normal reproduction (called normal data hereinafter) is supplied and stored once to a normal data memory 1. The normal data is also supplied to a controller 2 for generating several kinds of control signals.

The normal data stored in the normal data memory 1 is supplied to a special reproduction data generator 3 that generates special reproduction data, or digital signals for special reproduction (trick play).

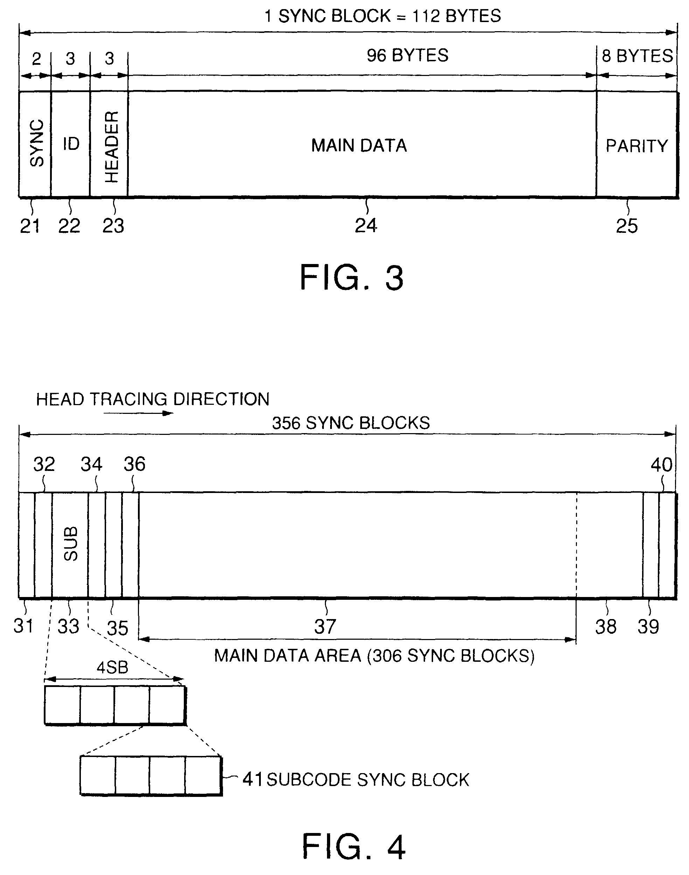

The normal data and special reproduction data are supplied to packet header adders 4 and 5, respectively, each for adding a header, for example, a four-byte header. The header-added normal data and special reproduction data are supplied to packet dividers 6 and 7, respectively. The header-added normal data and special reproduction data are divided into several data areas per 96 byte so as to correspond to a 96 byte-data storing area 24 in one sync block shown in FIG. 3. The divided normal and special reproduction data are supplied to header adders 8 and 9, respectively, and added with an adder supplied from a controller 2. The adder is a 3-byte header stored in a header area 23 in one sync block also shown in FIG. 3 which will be described later.

The header-added normal and special reproduction data are supplied from the header adders 8 and 9, respectively, to a selector 10. The selector 10 is controlled by a control signal supplied from the controller 2 to select the header-added normal data for normal reproduction or the header-added special reproduction data for special reproduction. The selector 10 is controlled at timing for recording the header-added special reproduction data intermittently instead of the normal data on specific locations of tracks along paths on a magnetic tape which will be traced by rotary magnetic heads in special reproduction.

The normal or special reproduction data supplied from the selector 10 per 99 (= 96 + 3) byte is supplied to an outer parity code generator 11. The generator 11 generates a 30-byte outer parity code as an error correction code for input 306 sync block data for one track (one sync block = 112 bytes). The 30-byte outer parity code is added to the normal or special reproduction data such that the outer parity code is multiplexed onto an area 38 shown in FIG. 4 which will be described later. The outer parity code-added normal or special reproduction data is supplied to an inner parity code generator 12. The generator 12 generates an 8-byte parity as an inner parity code. The 8-byte inner parity code is added to the normal or special reproduction data such that the inner parity code is multiplexed onto an area 25 shown in FIG. 3 which will be described later.

The outer and inner parity code-added normal or special reproduction data is supplied from the inner parity code generator 12 to a SYNC · ID adder 13. The adder 13 adds 2-byte synchronization (sync) signal and 3-byte address (ID) data to the head of the normal or special reproduction data such that the sync signal and ID data are multiplexed onto areas 21 and 22, respectively, shown in FIG. 3 which will also be described later.

The input normal data, or packet data is further supplied to a subcode data generator 14. Also supplied to the generator 14 is a control signal carrying several data. In response to the input data and control signal, the generator 14 generates subcode data (pack data) carrying special reproduction information for special reproduction data generation and several information for the input packet data, etc.

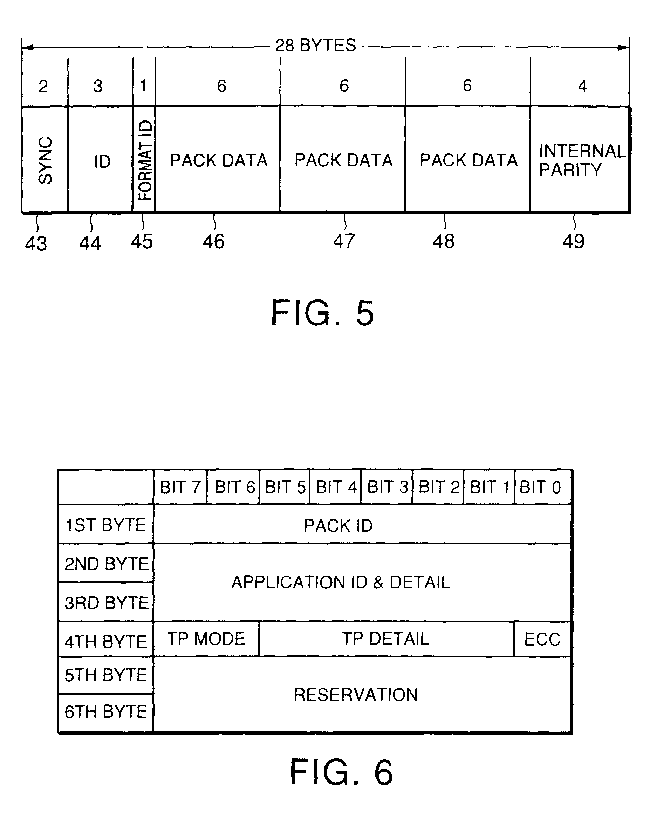

The subcode data is supplied to an inner parity code generator 15 that generates an inner parity as an 18-byte pack data. The inner parity is added to the subcode data such that the inner parity is multiplexed onto an area 43 shown in FIG. 5 which will be described later. The inner parity-added subcode data is supplied to a SYNC · ID adder 16. The adder 16 adds a 2-byte sync signal and 3-byte ID data to the head of the subcode data such that the sync signal and ID data are multiplexed onto areas 43 and 44, respectively, shown in FIG. 5 which will also be described later.

The sync- and ID-added normal or special reproduction data (main data) is supplied from the SYNC · ID adder 13 to a recorder unit 17. Also supplied to the unit 17 is the sync- and ID-added subcode data from the SYNC · ID adder 16.

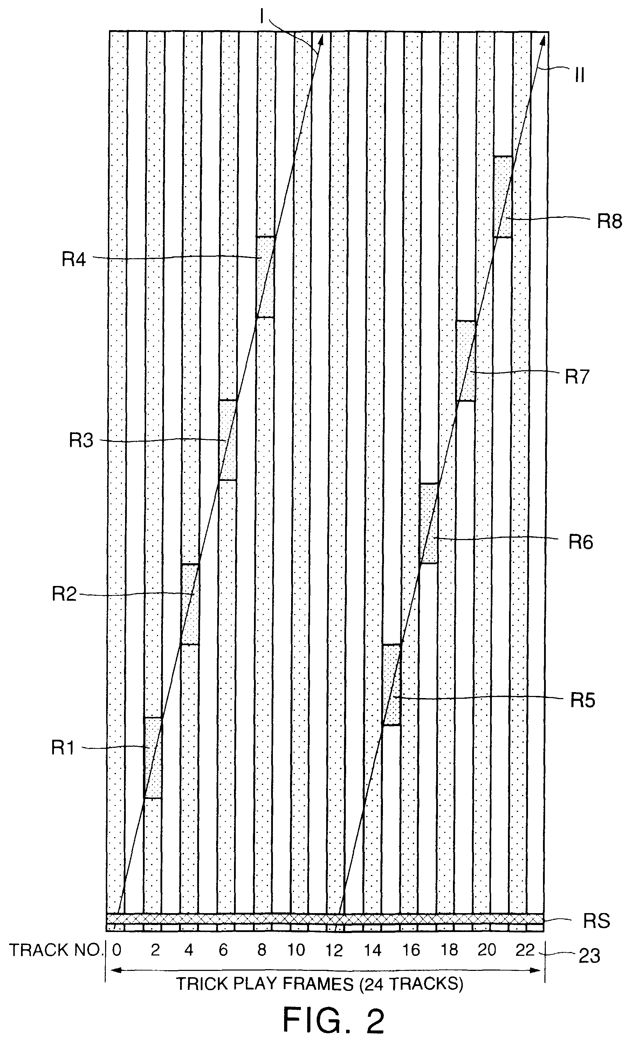

The recorder unit 17 multiplexes preamble and postamble data with the sync- and ID-added normal or special reproduction data and also with the sync- and ID-added subcode data. The multiplexed data according to the format as shown in FIG. 4 is output as a digital signal to be recorded. The output digital signal is recorded via a recording mechanism (not shown) on a storage medium 18 such as a magnetic tape according to the track format shown in FIG. 2.

As described in detail later, a feature of the present invention is that subcodes (generated by the subcode generator 14) carrying special reproduction data are recorded on or near specific track heads.

The recording mechanism mentioned above is provided with a rotary drum mounted on which are a first rotary magnetic head having a first azimuth angle and a second rotary magnetic head having a second azimuth angle. The rotary drum is inclined relative to the lengthwise portion of a magnetic tape (storage medium 18) which surrounds the rotary drum for approximately 180 degrees. The digital signal output from the recorder unit 17 is recorded per data block on the magnetic tape while it is travelling at a constant speed. The rotary drum is also used for normal or special reproduction to reproduce the recorded digital signal by switching the first and second magnetic heads.

Described next with reference to FIG. 2 is a track pattern formed on a magnetic tape by the recording apparatus shown in FIG. 1.

Illustrated in FIG. 2 is a pattern of 24 inclined tracks No. 0 to 23 formed on a magnetic tape with no guard bands. This track pattern consists of frames for 12 x trick play in the forward direction. The 12 x trick play indicates special reproduction 12 times faster than the normal speed reproduction. The track numbers are carried by pack data in a subcode area and header data in a main data area, etc.

Among the 24 tracks, those indicated by dots are formed at the first azimuth angle and the other tracks without dots are formed at the second azimuth angle. These tracks are alternately formed by the first and second rotary magnetic heads. Recorded on the sequential tracks are digital signals for normal reproduction which will be reproduced at the same speed as that for recording.

Also recorded on the magnetic tape are one or more special reproduction data which will be reproduced at speeds different from that for recording. More in detail, the special reproduction data are intermittently recorded instead of the normal data (data for normal speed reproduction) on specific locations of tracks along the paths which will be traced by the rotary magnetic heads in special reproduction. The data recorded as shown in FIG. 2 is digital signals for 12 x high speed reproduction (high speed reproduction data) in the forward direction.

In FIG. 2, the arrows I and II indicate paths which will be traced by the first and second rotary magnetic heads, respectively, in the forward 12 x high speed reproduction according to the track select servo system. The magnetic tape travels in the forward 12 x high speed reproduction at a speed 12 times higher than that for recording or normal speed reproduction.

The tape speed for the forward 12 x high speed reproduction is different from a relative speed between the rotary magnetic heads and the magnetic tape in recording. Therefore, it is understood that the paths I and II traced by the rotary magnetic heads cross over tracks.

Special reproduction data for 12 x high speed reproduction are recorded on areas R1 to R4 on the tracks No. 2, 4, 6 and 8, and on the path I that starts from the starting edge of the track No. 0. Special reproduction data for 12 x high speed reproduction are also recorded on areas R5 to R8 on the tracks No. 15, 17, 19 and 21, and on the path II that starts from the starting edge of the track No. 12.

The track select servo system is a system for controlling capstan rotation and track selection so that the tape travel speed and the rotary magnetic heads are in specific tracking phase. The system records control signals and also marker signals at the trace starting positions for special reproduction, and detects the marker signals in reproduction for controlling trace starting. The first and second rotary magnetic heads are controlled by the track select servo system at the 12 x high speed reproduction such that the first magnetic head starts tracing at the edge of the track No. 0 and the second magnetic head starts tracing at the edge of the track No. 12.

The digital data recorded per data block on the inclined tracks are for example made up of main data and subsidiary data called pack (data), etc. The pack is the fixed-length data that includes subsidiary information and identification information for the subsidiary information. The subsidiary information includes cassette ID, time code, recording date and time, source information (for example, channel and program index numbers used when digital broadcasting signals have been recorded), text data (for example, the titles and summary of programs) and so on.

The pack is recorded on each inclined track of a magnetic tape together with the main and subcode data. Each inclined track is formed by rotary magnetic head tracing to arrange a plurality of data areas of constant capacity. Each data area is called a sync block that corresponds to a data block.

Illustrated in FIG. 3 is an example of data format of a sync block. One sync block is a 112-byte data area that is a sequential arrangement of a 2-byte sync signal area 21 for sync block reproduction, a 3-byte ID area 22, a 3-byte header area 23 for storing several kinds of information, a 96-byte data storing area 24 for storing main data such as video data, and an 8-byte parity area 25 for correcting errors that would occur in the sync block data.

Illustrated in FIG. 4 is an example of data format of each inclined track shown in FIG. 2 according to the present invention. One track includes 356 sync blocks that are a sequential arrangement of a margin area 31, a preamble area 32, a subcode area 33, a postamble area 34, an IBG (Interblock Gap) area 35, a preamble area 36, a main data area 37, an error correction code area 38, a postamble area 39 and a margin area 40.

The main data area 37 consists of 306 sync blocks that are a multiple of six sync blocks. The error correction code area 38 consists of 30 sync blocks for storing an error correction outer parity code (C2 code). The subcode area 33 (denoted by RS in FIG. 2) consists of four sync blocks (= 448 bytes). Each sync block of the subcode area 33 consists of four 28-byte subcode sync blocks 41.

As illustrated in FIG. 5, one 28-byte subcode sync block 41 consists of a 2-byte sync signal area 43, a 3-byte address and parity (ID) area 44, a 1-byte format ID area 45, pack data areas 46, 47 and 48 of six bytes each, and a 4-byte parity area 49 for subcode sync block error correction. The pack data stored in the areas 46 to 48 is the subsidiary information such as the titles of the recorded programs, recording date and time, and absolute addresses on a magnetic tape.

A feature of the present invention is that the pack data area such as the area 46 (47 or 48) of one subcode sync block 41 which will be recorded at starting edge of every track is used as an area for storing special reproduction pack data as illustrated in FIG. 6.

As shown in FIG. 6, the 6-byte pack data area such as the area 46 for storing special reproduction pack data includes pack ID for the first byte indicating that the pack data is special reproduction pack data, application ID and its detail for the second and third byte as ID information for recorded video data, a special reproduction or trick play (TP) mode data for the two most significant bits of the fourth byte, detail data for TP mode such as reproduction speed and data rate for the bits from the bit five to bit one of the fourth byte, and information indicating whether the special reproduction data has an error correction code (ECC) for the least bit of the fourth byte. The fifth and sixth byte are areas for reservation of any programs a user desires.

According to the present invention, the subcode area RS (41) is provided at or near the starting edge of each inclined track. Furthermore, the 12 x speed special reproduction data are recorded in subcode areas RS (41) on every twelfth track such as the track No. 0 that is the starting track for 12 x speed head tracing and the track No. 12. The 12 x speed special reproduction data includes the pack data 46 to 48, and at least the pack data 46 has the format shown in FIG. 6.

The special reproduction data may be recorded in subcode areas RS (41) on other tracks besides the twelfth tracks for the 12 x speed special reproduction. It is however preferable to record subsidiary information other than the information described above in those subcode areas RS (41).

As described above, the track select servo system can obtain special reproduction information from the subcode areas RS (41) provided for every twelfth track such as track Nos. 0 and 12 in the 12 x speed special reproduction.

Another special reproduction at a speed other than 12 x speed can be carried out to follow the 12 x speed special reproduction. The other speed special reproduction starts from the track that is next to the last track for the 12 x speed special reproduction. The starting track is the track No. 0 (not shown) that is next to the track No. 23 in FIG. 2. The rotary magnetic heads still trace that track No. 0 for the 12 x speed special reproduction, however, detect special reproduction data for the other speed special reproduction from the subcode area of that track No. 0. A capstan motor (not shown) is then controlled on the basis of the special reproduction data for the other speed special reproduction. The present invention therefore achieves quick response to another speed special reproduction whenever the reproduction speed mode is changed.

The above description focuses on the forward 12 x speed special reproduction, however, the present invention can be applied to other speed special reproduction at speeds other than 12 x speed and also in the reverse direction.

Moreover, the track select servo system is described, however, the present invention can be applied to other systems, such as, speed lock servo system and phase lock servo system. The speed lock servo system controls a magnetic tape at a specific speed only by capstan servo. On the other hand, the phase lock servo system controls a magnetic tape at a specific speed and also controls rotary magnetic heads in specific tracking phase by controlling rotary phase of the rotary magnetic heads. Furthermore, the present invention can be applied to recording of special reproduction data of two or more different speeds with normal speed reproduction data.

According to the present invention, subcode blocks are recorded at or near the starting edges of the tracks of a magnetic tape which will be traced by the magnetic heads from the starting edges during the special reproduction. The subcode blocks include at least special reproduction data related to the digital signals for special reproduction.

The subcode blocks can be reproduced at any speed in special reproduction. Therefore, whenever the reproduction mode is switched from special reproduction at a speed to special reproduction at another speed, the special reproduction data can be obtained from the subcode blocks without normal reproduction, thus achieving quick response to special reproduction after the reproduction mode is switched.

## Claims

1. A method of recording digital signals as sequential tracks on a magnetic tape, comprising the steps of:
recording digital signals for normal reproduction over the tracks at a specific speed by magnetic heads, the digital signals for normal reproduction being to be reproduced also at the specific speed;
recording intermittently digital signals for special reproduction at the specific speed instead of the digital signals for normal reproduction by the magnetic heads on specific locations of the tracks along paths to be traced on the magnetic tape by the magnetic heads during the special reproduction, the digital signals for special reproduction being to be reproduced at speeds different from the specific speed; and
recording subcode blocks including at least special reproduction data related to the digital signals for special reproduction at or near starting edges of the tracks, the tracks being to be traced by the magnetic heads from the starting edges during the special reproduction.

2. The method of recording digital signals according to claim 1 further comprising the step of recording a plurality of data blocks on the magnetic tape, the data blocks including the digital signals for normal reproduction and the digital signals for special reproduction.

3. An apparatus for recording digital signals on a magnetic tape, comprising;
a first generator to generate digital signals for special reproduction based on digital signals for normal reproduction, the digital signals for normal reproduction being to be recorded and reproduced at the same specific speed, the digital signals for special reproduction being to be recorded at the specific speed but reproduced at speeds different from the specific speed;
a selector to select, as main data, either the digital signals for normal reproduction or the digital signals for special reproduction at timing in accordance with the speeds at which the digital signals for special reproduction are to be reproduced;
a second generator to generate subcode data including at least special reproduction data related to the digital signals for special reproduction;
a multiplexer to multiplex at least the main data and the subcode data to output multiplexed data; and
a recorder to record the multiplexed data as sequential tracks on the magnetic tape by magnetic heads in such a way that the digital signals for normal reproduction are recorded over the tracks at the specific speed, the digital signals for special reproduction are intermittently recorded at the specific speed instead of the digital signals for normal reproduction on specific locations of the tracks along paths to be traced on the magnetic tape by the magnetic heads during the special reproduction, and the subcode blocks are recorded at or near starting edges of the tracks, the tracks being to be traced by the magnetic heads from the starting edges during the special reproduction.

4. A storage medium for storing digital signals, comprising:
first sequential data areas to store digital signals for normal reproduction, the digital signals for normal reproduction having been recorded over the first data areas at a specific speed and being to be reproduced also at the specific speed;
second data areas, provided on specific locations of the first data areas along paths on the storage medium to be traced by a detector, to store digital signals for special reproduction, the digital signals for special reproduction having been recorded intermittently at the specific speed instead of the digital signals for normal reproduction, the digital signals for special reproduction being to be reproduced at speeds different from the specific speed; and
third data areas, provided at or near starting edges of the first data areas, to store subcode blocks including at least special reproduction data related to the digital signals for special reproduction, the first data areas being to be traced by the detector from the starting edges during the special reproduction.
